# EUROPÄISCHE PATENTSCHRIFT

(11) **EP 2 238 324 B1**
(45) Veröffentlichungstag und Bekanntmachung des Hinweises auf die Patenterteilung: **11.05.2011**
(21) Anmeldenummer: 08870910.0
(22) Anmeldetag: 11.11.2008
(51) Int. Cl.: F01N 9/00, F01N 11/00, F01N 3/20, B01D 53/94

(54) **VERFAHREN UND STEUERGERÄT ZUR STEUERUNG DER REDUKTIONSMITTELZUFUHR ZU EINEM SCR-KATALYSATOR**
METHOD AND CONTROL DEVICE FOR CONTROLLING THE REDUCING AGENT FEED TO A SCR CATALYST
PROCEDE ET APPAREIL DE COMMANDE DESTINES A COMMANDER L'ALIMENTATION D'UN CATALYSEUR SCR EN AGENT DE REDUCTION

(30) Priorität: 14.01.2008 DE 102008004222
(43) Veröffentlichungstag der Anmeldung: 13.10.2010
(73) Patentinhaber: Robert Bosch GmbH, 70442 Stuttgart (DE)
(72) Erfinder: LOEHR, Matthias, 99438 Troistedt (DE); WALZ, Christian, 76448Durmersheim (DE); RUDOLPH, Andreas, 89297 Roggenburg (DE)
(86) Internationale Anmeldenummer: PCT/EP2008/065269
(87) Internationale Veröffentlichungsnummer: WO 2009/089936

(56) Entgegenhaltungen:
- EP-A- 1 033 480
- EP-A- 1 653 058

## Beschreibung

### Stand der Technik

Die vorliegende Erfindung betrifft ein Verfahren zur Bestimmung einer Reduktionsmittelmenge, die einem SCR-Katalysator im Abgasreinigungssystem eines Verbrennungsmotors zuzuführen ist, um im Abgas enthaltene Stickoxide zu reduzieren, wobei die Reduktionsmittelmenge in Abhängigkeit von Betriebskenngrößen des Abgasreinigungssystems bestimmt wird und wobei eine Wirkung einer oxidierenden Abgasreinigungskomponente berücksichtigt wird, die im Strömungsweg des Abgases vor dem SCR-Katalysator angeordnet ist und die einen Not-anteil im Abgas zu Lasten eines NO-Anteils im Abgas erhöht. Die Erfindung betrifft ferner ein Steuergerät, das ein solches Verfahren durchführt. Ein solches Verfahren und ein solches Steuergerät ist jeweils aus der DE 103 01 606 A1 bekannt.

Die oxidierende Abgasreinigungskomponente ist zum Beispiel ein Oxidationskatalysator oder ein Partikelfilter oder eine Hintereinanderanordnung aus einem Oxidationskatalysator und einem Partikelfilter.

Grundsätzlich stellt eine mit NH₃ oder mit einer NH₃-abspallenden Substanz in einem SCR-Katalysator erfolgende selektive catalytic reduction von Stickoxiden ein aussichtsreiches Verfahren für die NOₓ -Minderung in sauerstoffreichen Abgasen dar. Dabei kann man einen Wirkungsgrad des SCR-Katalysators als Verhältnis der Masse reduzierter Stickoxide zur Gesamtmasse der Stickoxide definieren, die den SCR-Katalysator durchströmen. Eine Kenntnis des Wirkungsgrades und der Gesamtmasse an Stickoxiden erlaubt eine rechnerische Bestimmung der benötigten Reduktionsmittelmenge. Eine möglichst genaue Dosierung der Reduktionsmittelmenge ist wünschenswert, weil eine im Übermaß dosierte Reduktionsmittelmenge den Reduktionsmittelverbrauch erhöht und Geruchsbelästigungen verursacht, während eine nicht ausreichende Dosierung zu einer hinter dem möglichen Optimum zurückbleibenden NOₓ -Konvertierung führt.

Der Wirkungsgrad des SCR-Katalysators ist von der Raumgeschwindigkeit abhängig, unter der ein auf das Volumen des SCR-Katalysators normierter Abgasvolumenstrom pro Zeiteinheit verstanden wird. Er ist darüber hinaus von der Temperatur und, ganz entscheidend, auch vom NH₃-Füllstand des SCR-Katalysators abhängig: SCR-Katalysatoren lagern durch Adsorption an ihrer Oberfläche eine gewisse Menge an Ammoniak (NH₃) an. Dadurch stehen zur NOₓ - Reduktion neben dem direkt zudosierten Ammoniak oder dem aus einer zudosierten Harnstoff-Wasser-Lösung (HWL) abgespaltenen Ammoniak auch gespeichertes NH₃ zur Verfügung, wodurch sich der Wirkungsgrad gegenüber einem entleertem Katalysator erhöht. Das Speicherverhalten ist abhängig von der jeweiligen Betriebstemperatur des Katalysators. Je geringer die Temperatur ist, umso größer ist das Speichervermögen.

Eine weitere wesentliche Einflussgröße stellt der NO₂-Anteil (NO₂/NOₓ) im Abgas vor dem SCR-Katalysator dar. Dieser sollte idealerweise ungefähr 50 % betragen. Der NO₂-Anteil wird durch die oxidierende Abgasreinigungskomponente maßgeblich beeinflusst (erhöht).

Die Bestimmung der für eine optimale Stickoxidreduktion bei einem bestimmten Abgasmassenstrom erforderlichen Reduktionsmittel-Menge unterliegt einer Vielzahl von Fehlern und Abweichungen. Dazu gehören Fehler bei der Bestimmung der Motorrohemissionen, Ungenauigkeiten des Dosiersystems, Abweichungen der Reduktionsmittelkonzentration und natürlich auch Fehler bei der Abschätzung des Wirkungsgrades des SCR- Katalysators. Die Unsicherheit bei der Abschätzung des Wirkungsgrades übt dabei den größten Einfluss aus, so dass eine Verbesserung des für die Bestimmung verwendeten Rechenmodells das größte Potential zur Verbesserung der Dosierstrategie besitzt.

Bisher verwendete Rechenmodelle betrachten ein Gesamtsystem aus
einem Oxidationskatalysator und einem SCR-Katalysator und verwenden als Eingangsgrößen für eine Wirkungsgradberechnung die Temperatur, den NH₃-Füllstand und die Raumgeschwindigkeit. Tauscht man bei einem solchen System eine der beiden Komponenten aus, was zum Beispiel bei der Anpassung eines Abgasreinigungssystems an einen bestimmten Verbrennungsmotortyp oder einen bestimmten Fahrzeugtyp vorkommt, müssen Wirkungsgradmessungen und NH₃-Füllstandsmessungen am Motorprüfstand und/oder im Fahrzeug durchgeführt werden, um sämtliche Daten für das neu gebildete Gesamtsystem neu zu bestimmen.

### Offenbarung der Erfindung

Vor diesem Hintergrund besteht die Aufgabe der Erfindung in der Angabe eines Verfahrens und eines Steuergerätes, das jeweils einen Wechsel einer Komponente des Gesamtsystems aus oxidierender Abgasreinigungskomponente und SCR-Katalysator mit einem verringerten Datenerfassungs-Aufwand erlaubt.

Diese Aufgabe wird bei einem Verfahren der eingangs genannten Art dadurch gelöst, dass für die Bestimmung der Reduktionsmittelmenge zunächst ein Maß für die NO₂-Konzentration im Abgas zwischen der oxidierenden Abgasreinigungskomponente und dem SCR-Katalysator aus Betriebskenngrößen der oxidierenden Abgasreinigungskomponente bestimmt wird, und die Reduktionsmittelmenge aus Betriebskenngrößen des SCR-Katalysators sowie dem Maß für die NO₂-Konzentration im Abgas zwischen der oxidierenden Abgasreinigungskomponente und dem SCR-Katalysator bestimmt wird. Ferner wird diese Aufgabe durch die Merkmale des unabhängigen Vorrichtungsanspruchs gelöst.

Durch die Bestimmung der NO₂-Konzentration am Ausgang der oxidierenden Abgasreinigungskomponente und die Verwendung der so bestimmten NO₂-Konzentration als Eingangsgröße für nachfolgende Berechnungen, die darüber hinaus auf Betriebskenngrößen des SCR-Katalysators basieren, wird eine zweistufige Berechnung realisiert, deren erste Stufe die Wirkung der oxidierenden Abgasreinigungskomponente abbildet und deren zweite Stufe die Wirkung des SCR-Katalysators abbildet. Bei der zweistufigen Berechnung verwendete Kennfelder lassen sich dann eindeutig einer der beiden Stufen zuordnen. Wenn dann zum Beispiel die oxidierende Abgasreinigungskomponente gegen eine andere oxidierende Abgasreinigungskomponente ausgetauscht wird, die andere Eigenschaften besitzt und damit bei gleichen Eingangsgrößen zu einer anderen NO₂-Konzentration hinter der oxidierenden Abgasreinigungskomponente und somit auch zu einem anderen NOₓ-Umsatz im SCR-Katalysator führt, berührt dies lediglich die Daten und Kennfelder, in den denen sich die Eigenschaften der ersten oxidierenden Abgasreinigungskomponente abbilden. Die Daten und Kennfelder, in denen sich die Eigenschaften des SCR-Katalysators abbilden, werden dagegen nicht berührt und müssen daher auch nicht angepasst werden. Der aus der Auswechslung der Hardware-Komponente resultierende Aufwand für die Erfassung angepasster Daten und Kennfelder beschränkt sich daher auf die Erfassung der Daten, die für die ausgewechselte Komponente charakteristisch sind, so dass der Aufwand insgesamt wesentlich geringer ist als bei den bekannten Verfahren. Mit anderen Worten: Durch die Erfindung wird der modulare Aufbau eines Abgasreinigungssystems mit oxidierender Abgasreinigungskomponente und SCR-Katalysator auf ein modulares Rechenmodell abgebildet, dessen Module jeweils den Modulen des Abgasreinigungssystems entsprechen. Dadurch wird auch für das Rechenmodell ein modulares Baukastensystem realisiert, das den Entwicklungs- und Anpassungsaufwand der hier beschriebenen Abgasreinigungssysteme wesentlich verringert.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: das technische Umfeld der Erfindung in der Form eines Verbrennungsmotors mit einem Abgasreinigungssystem und einem Steuergerät;
- Fig. 2: durch eine Programmierung des Steuergeräts realisierte Signalverarbeitungsstrukturen als Ausführungsbeispiel der Erfindung;
- Fig. 3: eine Ausgestaltung zur Berücksichtigung einer Alterung der oxidierenden Abgasreinigungskomponente;
- Fig. 4: eine Ausgestaltung von Signalverarbeitungsstrukturen zur Bestimmung individueller Alterungsfaktoren, von denen einer die Alterung der oxidierenden Abgasreinigungskomponente und einer die Alterung des SCR-Katalysators repräsentiert; und
- Fig. 5: Signalverarbeitungsstrukturen einer bevorzugten Ausgestaltung einer Bestimmung eines Wirkungsgrades des SCR-Katalysators durch ein Rechenmodell.

### Ausführungsformen der Erfindung

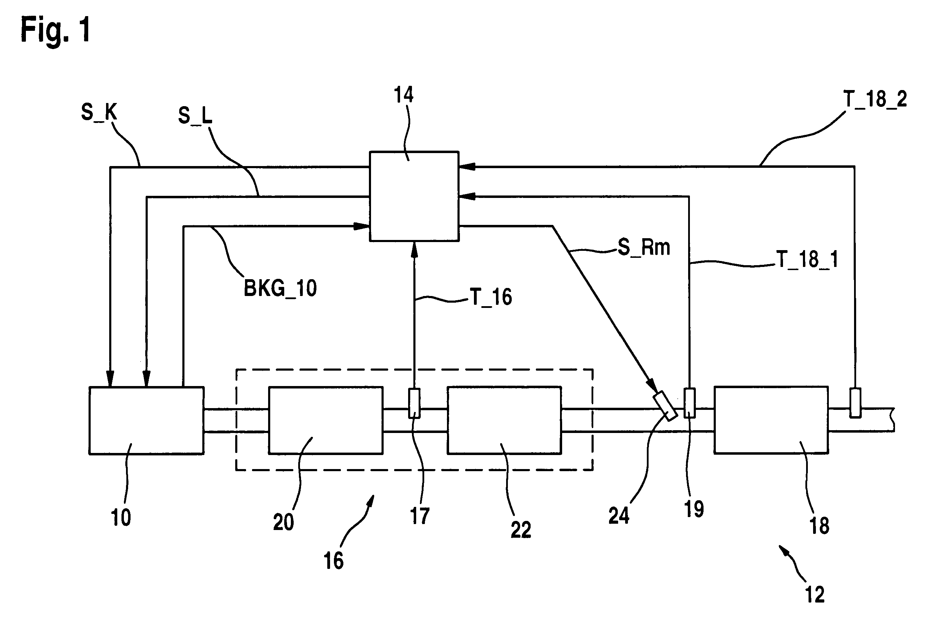

Im Einzelnen zeigt die Figur 1 einen Verbrennungsmotor 10 mit einem Abgasreinigungssystem 12 und einem Steuergerät 14. Das Abgasreinigungssystems 12 weist insbesondere eine oxidierende Abgasreinigungskomponente 16 und einen SCR-Katalysator 18 auf. Die oxidierende Abgasreinigungskomponente 16 weist einen Oxidationskatalysator 20 und/oder einen Partikelfilter 22 auf. Das Roh-Abgas des Verbrennungsmotors 10 enthält unter anderem Stickoxide NOₓ in Form von Stickstoffmonoxid NO und Stickstoffdioxid NO₂. Die oxidierende Abgasreinigungskomponente 16 beeinflusst das Verhältnis NO₂/ NOₓ im Abgas. Der Anteil von NO₂ an den gesamten, im Roh-Abgas des Verbrennungsmotors 10 enthaltenen Stickoxiden NOₓ beträgt etwa 10 % - 15 % und wird durch die oxidierende Abgasreinigungskomponente 16 bis auf Werte von idealerweise 50 % (kann auch mehr sein) vergrößert. Diese Vergrößerung ist erwünscht, weil sie die im nachfolgenden SCR-Katalysator 18 erfolgende selektive katalytische Reduktion der Stickoxide begünstigt.

Das Steuergerät 14 verarbeitet Betriebskenngrößen BKG_10 des Verbrennungsmotors 10 und Betriebskenngrößen T_16, T_18_1, T_18_2 des Abgasreinigungssystems 12 und bildet Stellgrößen S_K, S_L zur Steuerung des Verbrennungsmotors 12 und eine Stellgröße S_Rm zur Steuerung der Zufuhr eines Reduktionsmittels Rm zum Abgasreinigungssystem 12. Mit der Stellgröße S_K steuert das Steuergerät 14 die Kraftstoffzufuhr und mit der Stellgröße S_L die Luftzufuhr zum Verbrennungsmotor 10.

Mit der Stellgröße S_Rm steuert das Steuergerät 14 die Zufuhr von Reduktionsmittel Rm zum Abgasreinigungssystem 12 durch Ansteuern eines Reduktionsmitteldosierventils 24. Als Reduktionsmittel wird bevorzugt Ammoniak oder eine Ammoniak abspaltende Substanz wie HWL (HWL = Harnstoff-Wasser-Lösung) verwendet.

Zu den für die Stellgrößenbildung erfassten Betriebskenngrößen BKG_10 des Verbrennungsmotors 10 zählen zum Beispiel Ansaugluftmassenstrom, Drehzahl und Ansauglufttemperatur, wobei der Fachmann diese Aufzählung nicht als abschließend versteht und alternativ oder ergänzend weitere und/oder andere Betriebskenngrößen des Verbrennungsmotors 10 erfassen und auswerten würde.

Zu den Betriebskenngrößen des Abgasreinigungssystems 12 zählt zum Beispiel die Temperatur T_16 als Maß für die Temperatur der oxidierenden Abgasreinigungskomponente 16. Diese Temperatur T_16 kann entweder gemessen oder aus Betriebskenngrößen des Verbrennungsmotors 10 berechnet werden. Für eine Bestimmung von T_16 an einem Ort vor der oxidierenden Abgasreinigungskomponente 16 kommen beide Möglichkeiten in Frage. Für eine Bestimmung von T_16 an einem Ort hinter der oxidierenden Abgasreinigungskomponente 16 wird eine Messung bevorzugt, da Einflüsse exotherm verlaufender Oxidationsreaktionen auf die Temperatur T_16 vergleichsweise schwierig zu modellieren sind. Bei hinreichend genauer Modellierung, insbesondere unter Berücksichtigung einer Alterung, ist jedoch auch dort eine Modellierung der Temperatur T_16 möglich.

Ferner zählt eine Temperatur T_18 des SCR-Katalysators 18 zu den Betriebskenngrößen des Abgasreinigungssystems 12. In einer bevorzugten Ausgestaltung bildet das Steuergerät 14 eine Temperatur T_18 als Durchschnitt einer Abgastemperatur T_18_1 vor dem SCR-Katalysator 18 und einer Abgastemperatur T_18_2 hinter dem SCR-Katalysator 18. Auch hier gilt, dass T_18_1 und/oder T_18_2 durch Messung oder Modellierung bestimmt werden können. Für die Bestimmung von T_18_1 wird jedoch eine Messung bevorzugt, um von vergleichsweise schwierig zu modellierenden Einflüssen exotherm verlaufender Oxidationsreaktionen in der oxidierenden Abgasreinigungskomponente 16 unabhängig zu sein.

Das in der Figur 1 dargestellte technische Umfeld der Erfindung wird als bekannt vorausgesetzt. Ferner wird als bekannt vorausgesetzt, dass das Steuergerät 14 dazu eingerichtet ist, die Reduktionsmittelmenge, die dem SCR-Katalysator 18 zuzuführen ist, um im Abgas enthaltene Stickoxide zu reduzieren, in Abhängigkeit von Betriebskenngrößen des Verbrennungsmotors 10 und des Abgasreinigungssystems 12 zu bestimmen und dabei eine Wirkung der oxidierenden Abgasreinigungskomponente 16 zu berücksichtigen.

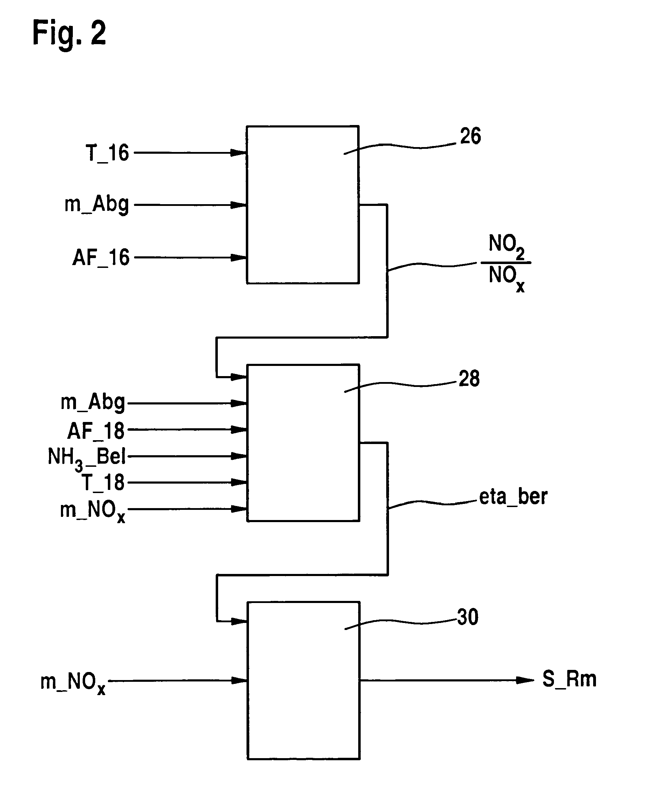

Figur 2 zeigt durch die Einrichtung, insbesondere durch die Programmierung des Steuergeräts 14 realisierte Signalverarbeitungsstrukturen. Figur 2 offenbart damit insbesondere sowohl Vorrichtungsaspekte als auch Verfahrensaspekte eines Ausführungsbeispiels der vorliegenden Erfindung.

Im Einzelnen zeigt die Figur 2 einen Block 26, der die Funktion der oxidierenden Abgasreinigungskomponente 16 durch ein erstes Rechenmodell repräsentiert. Ferner zeigt die Figur 2 einen Block 28, der die Funktion des SCR-Katalysators 18 durch ein zweites Rechenmodell repräsentiert und einen Block 30, der zur Bildung der Stellgröße S_Rm zur Ansteuerung des Reduktionsmitteldosierventils 24 dient.

Das erste Rechenmodell des Blocks 26 verarbeitet als Eingangsgrößen die Temperatur T_16, einen Wert m_Abg für den Abgasmassenstrom durch das Abgasreinigungssystem 12 und einen Alterungsfaktor AF_16, der Einflüsse einer Alterung der oxidierenden Abgasreinigungskomponente 16 auf den NO₂-Anteil an den Stickoxiden NOₓ im Abgas des Verbrennungsmotors 10 abbildet. Die Bestimmung der Temperatur T_16 wurde weiter oben bereits beschrieben. Der Wert für den Abgasmassenstrom m_Abg ergibt sich als Summe aus Luftmassenstrom und Kraftstoffmassenstrom und wird im Steuergerät 14 aus den dort verarbeiteten Betriebsparametern BKG_10 und/oder Stellgrößen S_K, S_L gebildet. Auf die Bestimmung des Alterungsfaktor AF_16 wird weiter unten noch detaillierter eingegangen. Diese Eingangsgrößen dienen in einer bevorzugten Ausgestaltung zur Adressierung eines Kennfelds, in dem Werte des NO₂-Anteils an den Stickoxiden NOₓ im Abgas hinter der oxidierenden Abgasreinigungskomponente 16 als Funktion der genannten Eingangsgrößen gespeichert sind. Es versteht sich, dass alternativ auch mehrere Kennfelder oder Kennlinien verwendet werden können, die jeweils durch eine der Eingangsgrößen oder durch eine Teilmenge der genannten Eingangsgrößen adressiert werden und deren Ausgangswerte dann nach einem vorbestimmten Zusammenhang zu einem Wert der NO₂-Konzentration im Abgas und/oder einem Wert NO₂/ NOₓ des NO₂-Anteils an der Gesamtmasse der Stickoxide NOₓ verarbeitet werden.

Das zweite Rechenmodell 28 verarbeitet den vom ersten Rechenmodell 26 als Ausgangswert ausgegebenen NO₂-Anteil NO₂/ NOₓ an den Stickoxidemissionen als eine von mehreren Eingangsgrößen zur Berechnung eines Wirkungsgrades eta_ber der selektiven katalytischen Reaktion im SCR-Katalysator 18. Weitere Eingangsgrößen für die Berechnung dieses Wirkungsgrades sind Werte des Abgasmassenstroms m_Abg, ein SCR-Katalysator-spezifischer Alterungsfaktor AF_18, ein Maß NH₃_Bel für die Beladung des SCR-Katalysators 18 mit Ammoniak, also für die dort gespeicherte Ammoniakmasse, ein Wert T_18 für eine durchschnittliche Temperatur des SCR-Katalysators 18 und ein Wert m_NOₓ für den NOₓ -Massenstrom durch den SCR-Katalysator 18.

Auch hier gilt, dass sich der gesuchte Wirkungsgrad eta_ber durch Zugriff auf ein Kennfeld ergibt, das mit den genannten Eingangsgrößen adressiert wird. Alternativ kann der gesuchte Wirkungsgrad eta_ber auch durch Zugriff auf mehrere Kennlinien und/oder Kennfelder bestimmt werden, die jeweils mit einer der Eingangsgrößen oder mit einer Teilmenge der Eingangsgrößen adressiert werden und deren Ausgangswerte nach einem vorbestimmten Zusammenhang miteinander verknüpft werden.

Die Bildung der Eingangsgröße NO₂_NOₓ, m_Abg und T_18 ist weiter oben bereits beschrieben worden. Auf die Bildung des Alterungsfaktors AF_18 wird weiter unten noch eingegangen. Die Ammoniakbeladung NH₃_Bel wird im Steuergerät 14 als Differenz der über das Reduktionsmitteldosierventil 24 dosierten Menge an Reduktionsmittel Rm und der damit dosierten Ammoniakmenge m_NH₃_zu und einer im SCR-Katalysator 18 für die Stickoxidreduzierung verbrauchten Menge m_NH₃_verb gebildet. Die Menge m_NH₃_verb ergibt sich als Funktion von Annahmen über den Wirkungsgrad des SCR-Katalysators 18 und/oder als Funktion des Signals eines hinter dem SCR-Katalysator 18 angeordneten und für eine Ammoniakkonzentration im Abgas empfindlichen Sensors. Der Wert des NOₓ-Rohmassenstroms m_NOₓ, also der Wert des vom Verbrennungsmotor 10 emittierten NOₓ -Rohmassenstroms, ergibt sich ebenfalls durch Kemfeldzugriffe und/oder durch Berechnungen im Steuergerät 14 unter Benutzung der dort bekannten Informationen über Betriebskenngrößen BKG_10 und Stellgrößen S_K, S_L.

Im Block 30 wird der im Block 18 modellierte Wirkungsgrad eta_ber zunächst mit dem Wert m_ NOₓ des NOₓ -Rohmassenstroms multipliziert. Der Wert m_NOₓ wird im Steuergerät 14 aus Betriebskenngrößen des Verbrennungsmotors 10 bestimmt, was zum Beispiel durch Zugriff auf ein oder mehrere Kennfelder und/oder Kennlinien erfolgt. Das Produkt entspricht damit einem Wert des im SCR-Katalysator 18 reduzierten NOₓ -Massenstroms. Unter Berücksichtigung stöchiometrischer Zusammenhänge zwischen der reduzierten NOₓ -Masse und dem für die Reduzierung verwendeten NH₃ wird ferner im Block 30 die erforderliche Reduktionsmittelmenge Rm berechnet, die über das Reduktionsmitteldosierventil 24 zu dosieren ist. Aus der Reduktionsmittelmenge Rm berechnet das Steuergerät 14 die Stellgröße S_Rm zur Ansteuerung des Reduktionsmitteldosierventils 24.

Die Figur 2 offenbart damit insbesondere eine Ausgestaltung von Signalverarbeitungsstrukturen, die sowohl Vorrichtungsaspekte als auch Verfahrensaspekte aufweisen. Dabei wird für die Bestimmung der Reduktionsmittelmenge zunächst ein Maß für die NO₂-Konzentration im Abgas zwischen der oxidierenden Abgasreinigungskomponente 16 und dem SCR-Katalysator 18 aus Betriebskenngrößen der oxidierenden Abgasreinigungskomponente 16 bestimmt. Anschließend wird die Reduktionsmittelmenge aus Betriebskenngrößen SCR-Katalysators 18 sowie aus dem Maß für die NO₂-Konzentration im Abgas zwischen der oxidierenden Abgasreinigungskomponente 16 und dem SCR-Katalysator 18 bestimmt.

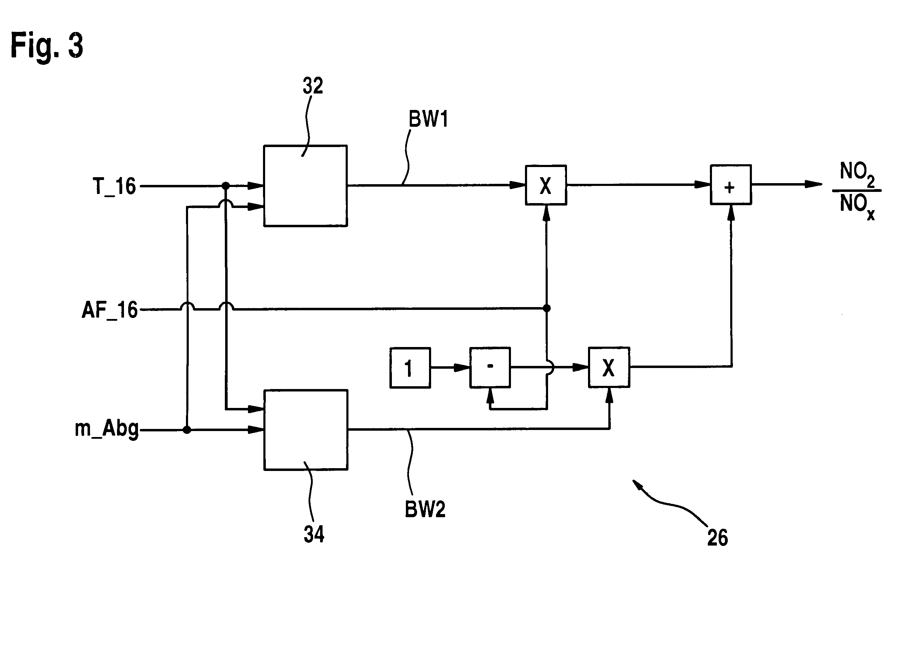

Figur 3 zeigt eine bevorzugte Ausgestaltung zur Berücksichtigung einer Alterung der oxidierenden Abgasreinigungskomponente 16 im Block 26. Danach werden zwei Kennfelder 32 und 34 parallel mit der Temperatur T_16 und dem Abgasmassenstrom m_Abg adressiert. Das Kennfeld 32 repräsentiert eine oxidierende Abgasreinigungskomponente 16 in einem ersten Alterungszustand, beispielsweise in einem neuwertigen Zustand, und gibt einen entsprechend hohen Basiswert BW1 des Maßes NO₂/ NOₓ für die NO₂-Konzentration (beziehungsweise den NO₂-Anteil) im Abgas vor. Das Kennfeld 34 repräsentiert eine oxidierende Abgasreinigungskomponente 16 in einem zweiten Alterungszustand, beispielsweise einem bereits gealterten Zustand, und gibt einen entsprechend verringerten Basiswert BW2 des Maßes NO₂/ NOₓ für den NO₂-Anteil (beziehungsweise die NO₂-Konzentration) im Abgas vor. Zur Interpolation zwischen beiden Basiswerten BW1 und BW2 wird ein Alterungsfaktor AF_16 verwendete, der Werte zwischen 1 für eine neuwertige und 0 für eine stark gealterte oxidierende Abgasreinigungskomponente 16 annimmt. Wie man leicht erkennt, ergibt sich durch die in Fig. 3 dargestellten multiplikativen und additiven Verknüpfungen der Wert für den Anteil NO₂/ NOₓ dann zu
- NO₂/NOₓ: = BW1 · AF_16 + BW2 · (1 - AF_16) = BW1 für AF_16 = 1, und
= BW2 für AF_16 = 0.

Für zwischen 0 und 1 liegende Werte ergeben sich entsprechende Zwischenwerte BW2 < NO₂/ NOx<BW1.

Die Ausgestaltung der Figur 3 offenbart damit insbesondere eine Bestimmung des Maßes NO₂/ NOₓ für die NO₂-Konzentration im Abgas zwischen der oxidierenden Abgasreinigungskomponente 16 und dem SCR-Katalysator 18, die in Abhängigkeit von der Alterung AF_16 dadurch erfolgt, dass zunächst ein erster Basiswert BW1 des genannten Maßes für einen ersten Alterungszustand der oxidierenden Abgasreinigungskomponente 16 und ein zweiter Basiswert BW2 des genannten Maßes für einen zweiten Alterungszustand der oxidierenden Abgasreinigungskomponente 16 gebildet wird und dass das für die Bestimmung der Reduktionsmittel Rm bestimmte Maß NO/ NOₓ durch eine von dem Alterungsfaktor AF_16 abhängige Interpolation zwischen den beiden Basiswerten BW1, BW2 ermittelt wird.

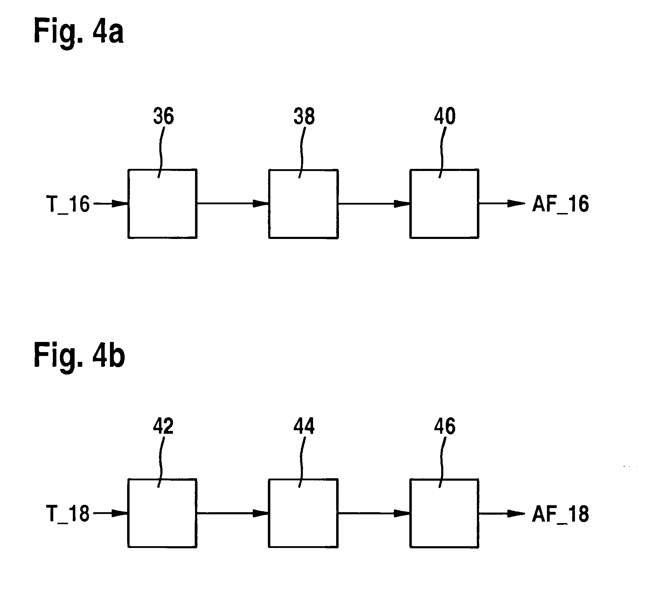

Figur 4 zeigt eine Ausgestaltung von Signalverarbeitungsstrukturen zur Bestimmung eines Alterungsfaktors AF_16, der die Alterung der oxidierenden Abgasreinigungskomponente 16 repräsentiert, und eines Alterungsfaktors AF_18, der die Alterung des SCR-Katalysators 18 repräsentiert. Zur Bestimmung des Alterungsfaktors AF_16 wird die Temperatur T_16 der oxidierenden Abgasreinigungskomponente 16 zur Adressierung eines Kennfeldes 36 verwendet, in dem temperaturabhängige Werte der Alterungsgeschwindigkeit der oxidierenden Abgasreinigungskomponente 16 gespeichert sind. Qualitativ betrachtet nimmt die Alterungsgeschwindigkeit mit steigender Temperatur T_16 zu. Im Block 38 wird der Alterungsfaktor AF_16 als Funktion aufeinander folgender Werte der Alterungsgeschwindigkeit bestimmt, beispielsweise durch eine Integration oder, bei diskreter Berechnung, durch eine Summation. Im Block 40 findet eine Normierung des Ausgangswertes des Blocks 38 auf Werte im Intervall 0, 1 statt. Die auf Werte aus diesem Intervall normierten Ausgangswerte des Blocks 38 stellen Alterungsfaktoren AF_16 dar, wie sie im Zusammenhang mit der Figur 3 bereits erläutert worden sind.

Figur 4b zeigt eine ganz analog erfolgende Bestimmung eines Alterungsfaktors AF_18, der den Alterungszustand des SCR-Katalysators 18 repräsentiert. Dazu wird die bereits beschriebene Durchschnittstemperatur T_18 des SCR-Katalysators 18 zur Adressierung einer Alterungsgeschwindigkeitskennlinie im Block 42 verwendet. Der dadurch gewonnene Kennlinienwert wird im Block 44 in ein Maß für die Alterung des SCR-Katalysators 18 umgerechnet und im Block 46 auf Werte aus dem Intervall 0,1 normiert. Die Ausgangsgrößen des Blocks 46 entsprechen damit einem zwischen 0 und 1 liegenden Alterungsfaktor AF_18 für den SCR-Katalysator 18.

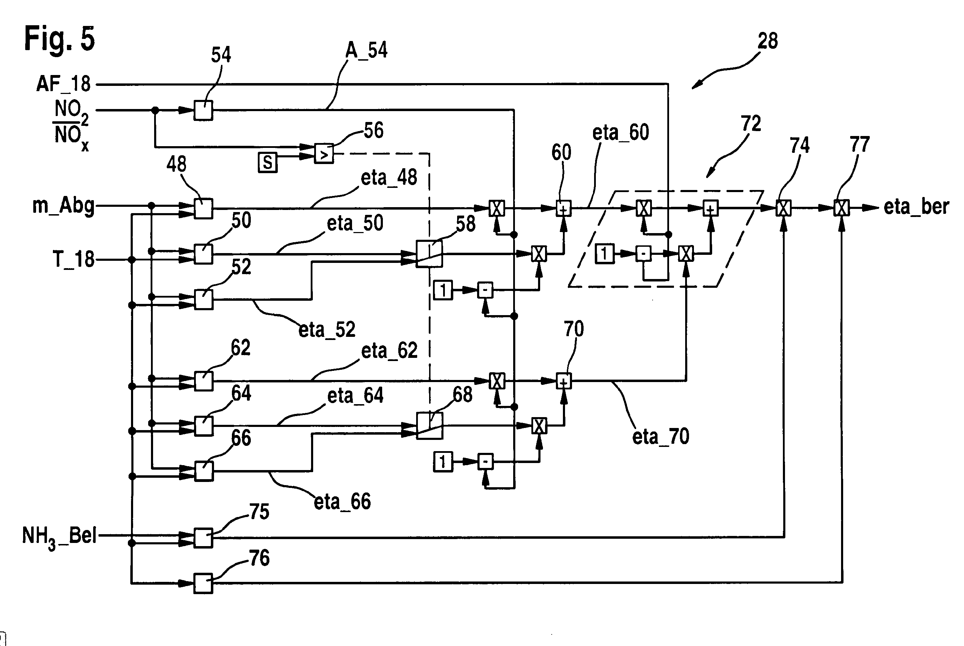

Figur 5 zeigt Signalverarbeitungsstrukturen einer bevorzugten Ausgestaltung des Blocks 28 aus der Figur 2, in dem der Wirkungsgrad des SCR-Katalysators 18 durch ein Rechenmodell bestimmt wird. Dazu werden zunächst drei Kennfelder 48, 50, 52 betrachtet, in denen Werte des Wirkungsgrades für einen Alterungszustand (zum Beispiel neuwertig) des SCR-Katalysators 18 abgespeichert sind und die jeweils parallel durch gleiche Werte des Abgasmassenstroms m_abg und der Temperatur T_1 8 des SCR-Katalysators 18 adressiert werden. In dem ersten Kennfeld 48 sind Wirkungsgradwerte für den Fall abgespeichert, dass der NO₂-Anteil am NOₓ - Massenstrom gleich 0 ist. In diesem Fall reagieren vier NO-Moleküle mit vier NH₃-Molekülen und einem O₂-Molekül zu vier N₂-Molekulen und sechs Wassermolekülen. In dem zweiten Kennfeld 50 sind Wirkungsgradwerte für den Fall abgespeichert, dass der NO₂-Anteil am NOₓ - Massenstrom gleich 50 % ist. In diesem Fall reagiert jeweils ein NO-Molekül und ein NO₂-Molekül mit jeweils einem NH₃-Molekül zu insgesamt zwei N₂- und drei Wassermolekülen. In dem dritten Kennfeld 48 sind Wirkungsgradwerte für den Fall abgespeichert, dass der NO₂-Anteil am NOₓ -Massenstrom gleich 100 % ist. In diesem Fall reagieren anteilsmäßig betrachtet jeweils sechs NO₂-Moleküle mit acht NH₃-Molekülen zu sieben N₂- und 12 Wassermolekülen.

Für jeden der drei Reaktionswege ergibt sich ein anderes Massenverhältnis der beteiligten Stickoxide zum Reduktionsmittel NH₃.

Mit dem aus dem Block 28 bekannten Anteil NO₂/ NOₓ wird eine Interpolation zwischen den Ausgangswerten von jeweils zwei der drei Kennfelder 48, 50, 52 gesteuert. Dazu wird die Größe NO₂/ NOₓ zunächst in einem Block 54 mit Hilfe einer Kennlinie auf Werte A_54 aus dem Intervall 0,1 normiert. Darüber hinaus erfolgt im Block 56 ein Schwellenwertvergleich mit einem Schwellenwert S. Wenn NO₂/ NOₓ zum Beispiel größer als S = 0,5 ist, schließt der Schalter 58 das Kennfeld 52 an und die Interpolation erfolgt zwischen den Kennfeldern 52 und 48. Dabei ergibt sich als Ergebnis der Interpolation hinter der Verknüpfung 60 ein Wirkungsgrad eta_60 = eta_48 · A_54 + eta_52 · (1 - A_54). Wenn NO₂/ NOₓ dagegen kleiner als 0,5 ist, schließt der Schalter 58 das Kennfeld 50 an und die Interpolation erfolgt entsprechend zwischen den Kennfeldern 50 und 48. Dabei ergibt sich als Ergebnis der Interpolation hinter der Verknüpfung 60 ein Wirkungsgrad eta_60 = eta_48 · A_54 + eta_52 · (1 - A_54).

Der Block 28 weist ferner drei weitere Kennfelder 62, 64, 66 auf, in denen Werte eta_62, eta_64, eta_66 des Wirkungsgrades für einen zweiten Alterungszustand (zum Beispiel stark gealtert) des SCR-Katalysators 18 für vergleichbare NO₂-Anteile gespeichert sind: Kennfeld 62 enthält Wirkungsgrade eta_62 für 0 % NO₂, Kennfeld 64 enthält Wirkungsgrade eta_64 für 50 % NO₂ und Kennfeld 66 enthält Wirkungsgrade eta_66 für 100 % NO₂. Zwischen den Ausgangswerten dieser Kennfelder 62, 64, 66 wird genauso interpoliert, wie es für die Ausgangswerte der Kennfelder 48, 50, 52 beschrieben worden ist, wobei der Schalter 68 die Funktion des Schalters 58 übernimmt. Hinter der Verknüpfung 70 ergeben sich damit für einen stark gealterten SCR-Katalysator 18 die folgenden Wirkungsgrade: eta_70 = eta_62 · A_54 + eta_64 · (1 - A_54) für den Fall, dass der Schalter 68 das Kennfeld 64 anschließt und, eta_70 = eta_62 · A_54 + eta_66 · (1 - A_54) für den Fall, dass der Schalter 68 das Kennfeld 66 anschließt. Mit der Struktur 72 wird zwischen den beiden Wirkungsgraden eta_60 und eta_70 interpoliert, wobei die Interpolation durch einen SCR-Katalysator-spezifischen Alterungsfaktor AF_18 gesteuert wird. AF-18 wird auf die bereits beschriebene Weise gebildet und liegt zwischen 0 und 1. Über optional vorhandene weitere Verknüpfungen 75 und 76 kann eine Abhängigkeit des Wirkungsgrades von der Beladung des SCR-Katalysators 18 mit NH₃ berücksichtigt werden.

Es wurde bereits erwähnt, dass die Ammoniakbeladung NH₃_Bel im Steuergerät 14 als Differenz der über das Reduktionsmitteldosierventil 24 dosierten Menge an Reduktionsmittel Rm und der damit dosierten Ammoniakmenge m_ NH₃_zu und einer im SCR-Katalysator 18 für die Stickoxidreduzierung verbrauchten Menge m_ NH₃_verb gebildet wird. Bei der Ausgestaltung nach der Fig. 5 dient ein Kennfeld 75, das mit der Beladung NH₃_Bel und der Temperatur T_18 adressiert wird, zur Ausgabe von Korrekturwerten, die mit der Verknüpfung 74 bevorzugt multiplikativ mit dem Wirkungsgrad am Ausgang der Struktur 72 verknüpft werden.

Es ist allgemein üblich, Laboruntersuchungen zur SCR-Aktivität mit NH₃-Gas und nicht mit einer HWL durchzuführen. Daraus resultiert ein geringfügig geänderter Wirkungsgrad insbesondere bei tiefen Temperaturen, was durch den Eingriff in der Verknüpfung 77 korrigiert werden kann, die ebenfalls bevorzugt multiplikativ ausgestaltet ist. Die in der Verknüpfung 77 mit dem bis dahin gebildeten Wirkungsgrad zu verknüpfende Korrekturgröße wird in der Ausgestaltung der Fig. 5 durch das Kennfeld 76 bereitgestellt, das mit der Temperatur T_1 8 des SCR-Katalysators 18 adressiert wird.

Mit dem am Ausgang der Verknüpfung 77 erhaltenen Wirkungsgrad eta_ber wird im Block 30 auf die bereits beschriebene Weise eine passende Reduktionsmittelmenge Rm und, ferner das für die Dosierung dieser Menge Rm notwendige Ansteuersignal für das Reduktionsmitteldosierventil 24 gebildet und ausgegeben.

## Patentansprüche

1. Verfahren zur Bestimmung einer Reduktionsmittelmenge (Rm), die einem SCR-Katalysator (18) im Abgasreinigungssystem (12) eines Verbrennungsmotors (10) zuzuführen ist, um im Abgas enthaltene Stickoxide zu reduzieren, wobei die Reduktionsmittelmenge (Rm) in Abhängigkeit von Betriebskenngrößen des Abgasreinigungssystems (12) bestimmt wird und wobei eine Wirkung einer oxidierenden Abgasreinigungskomponente (16) berücksichtigt wird, die im Strömungsweg des Abgases vor dem SCR-Katalysator (18) angeordnet ist und die einen NO₂-Anteil im Abgas zu Lasten eines NO-Anteils im Abgas erhöht, **dadurch gekennzeichnet, dass** für die Bestimmung der Reduktionsmittelmenge (Rm) zunächst ein Maß (NO₂/ NOₓ) für die NO₂-Konzentration im Abgas zwischen der oxidierenden Abgasreinigungskomponente (16) und dem SCR-Katalysator (18) aus Betriebskenngrößen der oxidierenden Abgasreinigungskomponente (16) bestimmt wird, und die Reduktionsmittelmenge (Rm) aus Betriebskenngrößen des SCR-Katalysators (18) sowie dem Maß (NO₂/ NOₓ) für die NO₂-Konzentration im Abgas zwischen der oxidierenden Abgasreinigungskomponente (16) und dem SCR-Katalysator (18) bestimmt wird.

2. Verfahren nach Anspruch 1, **dadurch gekennzeichnet, dass** das Maß (NO₂/ NOₓ) für die NO₂-Konzentration im Abgas zwischen der oxidierenden Abgasreinigungskomponente (16) und dem SCR-Katalysator (18) in Abhängigkeit von einem Abgasmassenstrom (m_Abg), einer Temperatur (T_16) der oxidierenden Abgasreinigungskomponente (16) und einer Alterung der oxidierenden Abgasreinigungskomponente (16) bestimmt wird.

3. Verfahren nach Anspruch 2, **dadurch gekennzeichnet, dass** die Alterung als Funktion einer Alterungsgeschwindigkeit bestimmt wird, die ihrerseits als Maß der Temperatur (T_16) der oxidierenden Abgasreinigungskomponente (16) bestimmt wird.

4. Verfahren nach einem der vorhergehenden Ansprüche, **dadurch gekennzeichnet, dass** die Bestimmung des Maßes (NO₂/ NOₓ) für die NO₂-Konzentration im Abgas zwischen der oxidierenden Abgasreinigungskomponente (16) und dem SCR-Katalysator (18) in Abhängigkeit von der Alterung **dadurch** erfolgt, dass zunächst ein erster Basiswert (BW1) des Maßes (NO₂/ NOₓ) für einen ersten Alterungszustand der oxidierenden Abgasreinigungskomponente (16) und ein zweiter Basiswert (BW2) des Maßes (NO₂/ NOₓ) für einen zweiten Alterungszustand der oxidierenden Abgasreinigungskomponente (16) gebildet wird und das für die Bestimmung der Reduktionsmittelmenge (Rm) bestimmte Maß (NO₂/ NOₓ) durch eine von einem Alterungsfaktor (AF_16) abhängige Interpolation zwischen den für die beiden Alterungszustände bestimmten Basiswerten (BW1, BW2) bestimmt wird.

5. Verfahren nach einem der vorhergehenden Ansprüche, **dadurch gekennzeichnet, dass** die Reduktionsmittelmenge (Rm) zusätzlich in Abhängigkeit von dem Abgasmassenstrom (m_Abg) und einer mittleren Temperatur (T_18) des SCR-Katalysators (18) als Betriebskenngrößen des SCR-Katalysators (18) bestimmt wird.

6. Verfahren nach Anspruch 5, **dadurch gekennzeichnet, dass** eine in Abhängigkeit von dem Abgasmassenstrom (m_Abg) und der mittleren Temperatur (T_18) erfolgende Bestimmung für drei verschiedene Werte des Maßes (NO₂/ NOₓ) erfolgt und die Reduktionsmittelmenge (Rm) durch Interpolation zwischen zwei der drei bestimmten Werte des Maßes (NO₂/ NOₓ) erfolgt.

7. Verfahren nach Anspruch 6, **dadurch gekennzeichnet, dass** die zwei der drei bestimmten Werte, zwischen denen interpoliert wird, in Abhängigkeit von dem Maß (NO₂/ NOₓ) bestimmt werden.

8. Verfahren nach Anspruch 5 oder 6, **dadurch gekennzeichnet, dass** die Reduktionsmittelmenge (Rm) zusätzlich in Abhängigkeit von einem Alterungszustand des SCR-Katalysators (18) bestimmt wird.

9. Steuergerät (14), das dazu eingerichtet ist, eine Reduktionsmittelmenge (Rm) zu bestimmen, die einem SCR-Katalysator (18) im Abgasreinigungssystem (12) eines Verbrennungsmotors (10) zuzuführen ist, um im Abgas enthaltene Stickoxide zu reduzieren, wobei das Steuergerät (14) dazu eingerichtet ist, die Reduktionsmittelmenge (Rm) in Abhängigkeit von Betriebskenngrößen des Abgasreinigungssystems zu bestimmen und dabei eine Wirkung einer oxidierenden Abgasreinigungskomponente (16) zu berücksichtigen, die im Strömungsweg des Abgases vor dem SCR-Katalysator (18) angeordnet ist und die einen NO₂-Anteil im Abgas zu Lasten eines NO-Anteils im Abgas erhöht, **dadurch gekennzeichnet, dass** das Steuergerät (14) dazu eingerichtet ist, für die Bestimmung der zuzuführenden Reduktionsmittelmenge (Rm) zunächst ein Maß (NO₂/ NOₓ) für die NO₂-Konzentration im Abgas zwischen der oxidierenden Abgasreinigungskomponente (16) und dem SCR-Katalysator (18) aus Betriebskenngrößen der oxidierenden Abgasreinigungskomponente (16) zu bestimmen und die Reduktionsmittelmenge (Rm) aus Betriebskenngrößen des SCR-Katalysators (18) sowie dem Maß (NO₂/ NOₓ) für die NO₂-Konzentration im Abgas zwischen der oxidierenden Abgasreinigungskomponente (16) und dem SCR-Katalysator (18) zu bestimmen.

10. Steuergerät (14) nach Anspruch 9, **dadurch gekennzeichnet, dass** es dazu eingerichtet ist, ein Verfahren nach einem der Ansprüche 2 bis 8 durchzuführen.

## Claims

1. Method for determining a reducing agent quantity (Rm) to be supplied to an SCR catalytic converter (18) in the exhaust-gas purification system (12) of an internal combustion engine (10) in order to reduce nitrogen oxides contained in the exhaust gas, the reducing agent quantity (Rm) being determined as a function of characteristic operating variables of the exhaust-gas purification system (12), and consideration being given to an action of an oxidizing exhaust-gas purification component (16) which is arranged in the flow path of the exhaust gas upstream of the SCR catalytic converter (18) and which increases an NO₂ fraction in the exhaust gas at the expense of an NO fraction in the exhaust gas, **characterized in that**, for the determination of the reducing agent quantity (Rm), firstly a measure (NO₂/NOₓ) for the NO₂ concentration in the exhaust gas between the oxidizing exhaust-gas purification component (16) and the SCR catalytic converter (18) is determined from characteristic operating variables of the oxidizing exhaust-gas purification component (16), and the reducing agent quantity (Rm) is determined from characteristic operating variables of the SCR catalytic converter (18) and from the measure (NO₂/NOₓ) for the NO₂ concentration in the exhaust gas between the oxidizing exhaust-gas purification component (16) and the SCR catalytic converter (18).

2. Method according to Claim 1, **characterized in that** the measure (NO₂/NOₓ) for the NO₂ concentration in the exhaust gas between the oxidizing exhaust-gas purification component (16) and the SCR catalytic converter (18) is determined as a function of an exhaust-gas mass flow (m_Abg), a temperature (T_16) of the oxidizing exhaust-gas purification component (16) and a degree of ageing of the oxidizing exhaust-gas purification component (16).

3. Method according to Claim 2, **characterized in that** the degree of ageing is determined as a function of an ageing rate which in turn is determined as a measure of the temperature (T_16) of the oxidizing exhaust-gas purification component (16).

4. Method according to one of the preceding claims, **characterized in that** the determination of the measure (NO₂/NOₓ) for the NO₂ concentration in the exhaust gas between the oxidizing exhaust-gas purification component (16) and the SCR catalytic converter (18) is carried out as a function of the degree of ageing by virtue, firstly, of a first base value (BW1) of the measure (NO₂/NOₓ) for a first ageing state of the oxidizing exhaust-gas purification component (16) and a second base value (BW2) of the measure (NO₂/NOₓ) for a second ageing state of the oxidizing exhaust-gas purification component (16) being formed, and the measure (NO₂/NOₓ) determined for the determination of the reducing agent quantity (Rm) being determined by an interpolation, which is dependent on an ageing factor (AF_16), between the base values (BW1, BW2) determined for the two ageing states.

5. Method according to one of the preceding claims, **characterized in that** the reducing agent quantity (Rm) is determined additionally as a function of the exhaust-gas mass flow (m_Abg) and a mean temperature (T_18) of the SCR catalytic converter (18) as characteristic operating variables of the SCR catalytic converter (18).

6. Method according to Claim 5, **characterized in that** a determination, which is carried out as a function of the exhaust-gas mass flow (m_Abg) and the mean temperature (T_18), is carried out for three different values of the measure (NO₂/NOₓ), and the reducing agent quantity (Rm) is determined by interpolation between two of the three determined values of the measure (NO₂/NOₓ).

7. Method according to Claim 6, **characterized in that** those two of the three determined values between which interpolation is carried out are determined as a function of the measure (NO₂/NOₓ).

8. Method according to Claim 5 or 6, **characterized in that** the reducing agent quantity (Rm) is determined additionally as a function of an ageing state of the SCR catalytic converter (18).

9. Control unit (14) which is designed to determine a reducing agent quantity (Rm) to be supplied to an SCR catalytic converter (18) in the exhaust-gas purification system (12) of an internal combustion engine (10) in order to reduce nitrogen oxides contained in the exhaust gas, the control unit (14) being designed to determine the reducing agent quantity (Rm) as a function of characteristic operating variables of the exhaust-gas purification system and, in so doing, to give consideration to an action of an oxidizing exhaust-gas purification component (16) which is arranged in the flow path of the exhaust gas upstream of the SCR catalytic converter (18) and which increases an NO₂ fraction in the exhaust gas at the expense of an NO fraction in the exhaust gas, **characterized in that** the control unit (14) is designed, for the determination of the reducing agent quantity (Rm) to be supplied, to firstly determine a measure (NO₂/NOₓ) for the NO₂ concentration in the exhaust gas between the oxidizing exhaust-gas purification component (16) and the SCR catalytic converter (18) from characteristic operating variables of the oxidizing exhaust-gas purification component (16), and to determine the reducing agent quantity (Rm) from characteristic operating variables of the SCR catalytic converter (18) and from the measure (NO₂/NOₓ) for the NO₂ concentration in the exhaust gas between the oxidizing exhaust-gas purification component (16) and the SCR catalytic converter (18).

10. Control unit (14) according to Claim 9, **characterized in that** it is designed to carry out a method according to one of Claims 2 to 8.

## Revendications

1. Procédé pour déterminer une quantité d'agent de réduction (Rm), qui doit être acheminée à un catalyseur SCR (18) dans un système de purification des gaz d'échappement (12) d'un moteur à combustion interne (10), afin de réduire les oxydes d'azote contenus dans les gaz d'échappement, la quantité d'agent de réduction (Rm) étant déterminée en fonction de valeurs caractéristiques de fonctionnement du système de purification des gaz d'échappement (12) et un effet d'un composant de purification des gaz d'échappement oxydant (16) étant pris en compte, lequel est disposé dans la voie d'écoulement des gaz d'échappement avant le catalyseur SCR (18) et augmente une proportion de NO₂ dans les gaz d'échappement au détriment d'une proportion de NO, **caractérisé en ce que** pour déterminer la quantité d'agent de réduction (Rm), on détermine d'abord une mesure (NO₂/NOₓ) pour la concentration en NO₂ dans les gaz d'échappement entre le composant de purification des gaz d'échappement oxydant (16) et le catalyseur SCR (18) à partir de valeurs caractéristiques de fonctionnement du composant de purification des gaz d'échappement oxydant (16), et la quantité d'agent de réduction (Rm) est déterminée à partir de valeurs caractéristiques de fonctionnement du catalyseur SCR (18) ainsi que de la mesure (NO₂/NOₓ) pour la concentration en NO₂ dans les gaz d'échappement entre le composant de purification des gaz d'échappement oxydant (16) et le catalyseur SCR (18).

2. Procédé selon la revendication 1, **caractérisé en ce que** la mesure (NO₂/NOₓ) pour la concentration en NO₂ dans les gaz d'échappement entre le composant de purification des gaz d'échappement oxydant (16) et le catalyseur SCR (18) est déterminée en fonction d'un débit massique de gaz d'échappement (m_Abg), d'une température (T_16) du composant de purification des gaz d'échappement oxydant (16) et d'un vieillissement du composant de purification des gaz d'échappement oxydant (16).

3. Procédé selon la revendication 2, **caractérisé en ce que** le vieillissement est déterminé en fonction d'une vitesse de vieillissement, qui est pour sa part déterminée en tant que mesure de la température (T_16) du composant de purification des gaz d'échappement oxydant (16).

4. Procédé selon l'une quelconque des revendications précédentes, **caractérisé en ce que** la détermination de la mesure (NO₂/NOₓ) pour la concentration en NO₂ dans les gaz d'échappement entre le composant de purification des gaz d'échappement oxydant (16) et le catalyseur SCR (18) a lieu en fonction du vieillissement par le fait qu'une valeur de base (BW1) de la mesure (NO₂/NOₓ) est d'abord formée pour un premier état de vieillissement du composant de purification des gaz d'échappement oxydant (16) puis une deuxième valeur de base (BW2) de la mesure (NO₂/NOₓ) est formée pour un deuxième état de vieillissement du composant de purification des gaz d'échappement oxydant (16) et la mesure (NO₂/NOₓ) déterminée pour la détermination de la quantité d'agent de réduction (Rm) est déterminée par une interpolation dépendant d'un facteur de vieillissement (AF_16) entre les valeurs de base (BW1, BW2) déterminées pour les deux états de vieillissement.

5. Procédé selon l'une quelconque des revendications précédentes, **caractérisé en ce que** la quantité d'agent de réduction (Rm) est déterminée en outre en fonction du débit massique de gaz d'échappement (m_Abg) et d'une température moyenne (T_18) du catalyseur SCR (18) sous forme de valeurs caractéristiques de fonctionnement du catalyseur SCR (18).

6. Procédé selon la revendication 5, **caractérisé en ce qu'**une détermination réalisée en fonction du débit massique de gaz d'échappement (m_Abg) et de la température moyenne (T_18) a lieu pour trois valeurs différentes de la mesure (NO₂/NOₓ) et la quantité d'agent de réduction (Rm) est déterminée par interpolation entre deux des trois valeurs déterminées de la mesure (NO₂/NOₓ).

7. Procédé selon la revendication 6, **caractérisé en ce que** les deux des trois valeurs déterminées, entre lesquelles est réalisée l'interpolation, sont déterminées en fonction de la mesure (NO₂/NOₓ).

8. Procédé selon la revendication 5 ou 6, **caractérisé en ce que** la quantité d'agent de réduction (Rm) est déterminée en outre en fonction d'un état de vieillissement du catalyseur SCR (18).

9. Appareil de commande (14), qui est prévu pour déterminer une quantité d'agent de réduction (Rm), qui doit être acheminée à un catalyseur SCR (18) dans un système de purification de gaz d'échappement (12) d'un moteur à combustion interne (10), afin de réduire les oxydes d'azote contenus dans les gaz d'échappement, l'appareil de commande (14) étant prévu pour déterminer la quantité d'agent de réduction (Rm) en fonction de valeurs caractéristiques de fonctionnement du système de purification des gaz d'échappement et pour prendre en compte dans ce cas un effet d'un composant de purification des gaz d'échappement oxydant (16), qui est disposé dans la voie d'écoulement des gaz d'échappement avant le catalyseur SCR (18) et augmente une proportion de NO₂ dans les gaz d'échappement au détriment d'une proportion de NO, **caractérisé en ce que** l'appareil de commande (14) est prévu, pour la détermination de la quantité d'agent de réduction (Rm) à acheminer, pour déterminer d'abord une mesure (NO₂/NOₓ) pour la concentration en NO₂ dans les gaz d'échappement entre le composant de purification des gaz d'échappement oxydant (16) et le catalyseur SCR (18) à partir de valeurs caractéristiques de fonctionnement du composant de purification des gaz d'échappement oxydant (16), et pour déterminer la quantité d'agent de réduction (Rm) à partir de valeurs caractéristiques de fonctionnement du catalyseur SCR (18) ainsi que de la mesure (NO₂/NOₓ) pour la concentration en NO₂ dans les gaz d'échappement entre le composant de purification des gaz d'échappement oxydant (16) et le catalyseur SCR (18).

10. Appareil de commande (14) selon la revendication 9, **caractérisé en ce qu'**il est prévu pour mettre en oeuvre un procédé selon l'une quelconque des revendications 2 à 8.
